# FASCICULE DE BREVET EUROPEEN

(11) **EP 2 369 259 B1**
(45) Date de publication et mention de la délivrance du brevet: **29.11.2017**
(21) Numéro de dépôt: 11159577.3
(22) Date de dépôt: 24.03.2011
(51) Int. Cl.: F24J 2/02, F24J 2/12, F24J 2/36

(54) **Dispositif pliable de concentration d'un faisceau de rayonnement électromagnétique et appareil de cuisson solaire comprenant un tel dispositif**
Zusammenklappbare Vorrichtung zur Konzentration eines elektromagnetischen Strahlenbündels, und Solarkochgerät, das mit einer solchen Vorrichtung ausgestattet ist
Folding device for concentrating a beam of electromagnetic radiation and solar cooker device including said device

(30) Priorité: 26.03.2010 FR 1052203
(43) Date de publication de la demande: 28.09.2011
(73) Titulaire: Bivas, Alain, 81120 Lamillarie (FR)
(72) Inventeur: Bivas, Alain, 81120 Lamillarie (FR)
(74) Mandataire: Cabinet Morelle & Bardou SC

(56) Documents cités:
- EP-A1- 1 318 012
- WO-A1-03/006894
- DE-A1- 10 238 632
- DE-A1-102007 056 456
- FR-A1- 2 911 950
- US-A- 2 859 745
- US-A- 3 397 399
- US-A- 4 130 106
- US-A- 4 257 404
- US-A- 4 292 957
- US-A- 4 848 320

## Description

La présente invention concerne un dispositif de concentration d'un faisceau de rayonnement électromagnétique, et plus particulièrement un tel dispositif possédant une position ouverte et une position fermée, et comprenant une pluralité de panneaux en matériau flexible en forme de fuseaux sensiblement plans en l'absence de contrainte mécanique, chaque panneau ayant deux bords de liaison et un bord libre et étant articulé à deux panneaux adjacents le long de ses dits bords de liaison, les panneaux étant assemblés pour former, dans la position ouverte, une surface en forme générale de paraboloïde. La présente invention concerne également un appareil de cuisson solaire comprenant un tel dispositif.

On connaît déjà des appareils de cuisson alimentaire utilisant un dispositif de concentration du rayonnement solaire.

A titre d'exemple, le document US 4 848 320 décrit un tel dispositif dont le dispositif de concentration est pliant mais qui ne possède pas une forme de paraboloïde une fois déplié. Son rendement énergétique est donc médiocre.

D'autres dispositifs de concentration, décrits par exemple dans les documents DE 10 2007 056456 et US 2 859 745, présentent une forme plus ou moins proche d'un paraboloïde pour réfléchir le rayonnement et le concentrer à leur foyer. Un récipient de cuisson est disposé à ce foyer et reçoit les aliments à cuire. Mais ces dispositifs ne sont pas pliables et ne peuvent donc être transportés commodément.

On connaît également par le document US 3 397 399 un réflecteur pliable, par exemple une antenne parabolique, conforme au préambule de la revendication 1. Ce réflecteur est composé de panneaux adjacents en matériau flexible en forme de fuseaux. Toutefois, dans ce document, le paraboloïde déployé présente l'inconvénient de ne pas être autoporteur et de nécessiter un axe central et des rayons pour son maintien. De plus, il n'est pas aisément plié à plat mais à la manière d'un parapluie.

D'une manière générale, les appareils connus présentent usuellement plusieurs inconvénients.

En premier lieu, leur installation est généralement complexe. Certains sont distribués en kit qui doivent être montés à l'aide d'articles de visserie lourds et onéreux. Le montage nécessite du temps et de l'outillage. De plus, ces appareils sont souvent montés une fois pour toutes et ne peuvent donc être déplacés d'un lieu à un autre. Ils sont en outre difficilement orientables de sorte que leur temps d'utilisation en continu est relativement bref.

D'autres appareils possèdent un dispositif de concentration pliable réalisé en matériau souple de manière à pouvoir être montés suffisamment rapidement pour permettre des déplacements relativement aisés. Ces dispositifs de concentration présentent toutefois l'inconvénient qu'une fois montés, leur forme ne constitue que très approximativement un paraboloïde de sorte que leur efficacité en termes de focalisation du rayonnement solaire est faible. De plus, du fait du matériau utilisé, ils sont sensibles au vent et leur durée de vie est limitée.

D'autres appareils de cuisson solaire possèdent un dispositif de concentration de forme trop plate dont le foyer est largement à l'extérieur du paraboloïde. Il en résulte des dangers à l'utilisation, incendie et éblouissement de l'utilisateur. Cette forme nécessite en outre des réorientations fréquentes du dispositif de concentration et rend l'appareil de cuisson plus sensible au vent.

L'invention vise à pallier les inconvénients des appareils de cuisson solaire connus et de leurs dispositifs de concentration.

Plus particulièrement, l'invention a pour but de fournir un dispositif de concentration très facilement pliable et dépliable, et néanmoins robuste.

L'invention a également pour but de fournir un appareil de cuisson facile à monter, léger, aisément transportable et pouvant être rangé de façon compacte.

L'invention a également pour but de fournir un tel appareil de cuisson pouvant être utilisé sans danger, sans nécessiter des réorientations fréquentes.

A cet effet, l'invention a tout d'abord pour objet un dispositif de concentration d'un faisceau de rayonnement électromagnétique, conforme à la revendication 1.

On entend par "panneau courant" un panneau quelconque à l'exception des panneaux extérieurs de chaque empilement.

Chaque panneau extérieur de chaque empilement peut être relié rigidement par un de ses bords de liaison à un bord de liaison du panneau adjacent de l'autre empilement ou, en variante, lui être relié de façon articulée.

Le dispositif de concentration selon l'invention est donc monté par simple dépliage de ses panneaux, sans nécessiter d'armature, le dépliage provoquant la courbure du matériau rigide des panneaux. La structure dépliée est autoporteuse par arc-boutement les uns à côté des autres des panneaux contraints mécaniquement du fait de leur forme incurvée. En position fermée, le dispositif présente une configuration très compacte en deux empilements de panneaux, solidaires et disposés côte à côte. Le pliage et le dépliage du dispositif ne nécessitent que quelques secondes.

On observera que, si n est un entier pair, les deux empilements sont de même hauteur. Chaque panneau possède, en l'absence de contrainte mécanique, un bord de liaison sensiblement rectiligne et un bord de liaison convexe, chaque bord de liaison rectiligne d'un panneau étant relié à un bord de liaison rectiligne d'un panneau adjacent et chaque bord de liaison convexe d'un panneau étant relié à un bord de liaison convexe d'un panneau adjacent, de manière que, dans la position fermée du dispositif, les deux empilements juxtaposés ont leurs bords rectilignes côte à côte et leurs bords convexes à l'extérieur des deux empilements juxtaposés.

Plus particulièrement, les bords de liaison convexes peuvent avoir une forme générale de parabole.

Une telle découpe de panneaux permet de donner au dispositif déplié une forme proche d'un paraboloïde, et donc de fournir une bonne concentration du faisceau de rayonnement électromagnétique.

L'angle de chaque panneau compris entre les deux bords de liaison peut être découpé de manière à former un trou au sommet du paraboloïde dans la position ouverte du dispositif.

Le trou ainsi formé au sommet du paraboloïde facilite son pliage sans usure et assure ainsi sa longévité. Il réduit en outre la prise au vent. Ce trou ne présente pas d'inconvénient sur le plan du rendement dans la mesure où un dispositif de collecte du faisceau réfléchi est de toute manière destiné à être disposé au foyer et occulte donc cette partie du paraboloïde.

Dans un mode de réalisation particulier, lesdits panneaux sont réalisés en tôle formant miroir.

Egalement dans un mode de réalisation particulier, lesdits panneaux sont reliés, du côté intérieur au paraboloïde, par un matériau souple adhésif formant miroir.

L'ensemble du paraboloïde participe donc à la concentration du rayonnement, y compris les zones de liaison entre panneaux.

Egalement dans un mode de réalisation particulier, lesdits panneaux sont reliés, du côté extérieur au paraboloïde, par un matériau souple adhésif renforcé en fibres de verre.

L'utilisation d'un tel matériau composite renforcé en fibres de verre permet un grand nombre de pliages et de dépliages du dispositif sans endommagement et lui assure donc une importante durée de vie.

L'invention a également pour objet un appareil de cuisson solaire, comprenant un dispositif de concentration tel que décrit ci-dessus pour concentrer le rayonnement solaire au foyer dudit paraboloïde, des moyens d'orientation pour ledit dispositif et des moyens de montage d'un récipient de cuisson audit foyer.

Dans ce cas, le rayonnement électromagnétique utilisé est principalement le rayonnement infrarouge. Le récipient disposé au foyer du dispositif de concentration est de préférence de couleur noire pour limiter les pertes thermiques en transformant le rayonnement incident visible en rayonnement infrarouge. Les moyens d'orientation permettent de diriger l'axe du paraboloïde sensiblement dans la direction du soleil, et éventuellement de l'y maintenir dans le temps.

Dans un mode de réalisation particulier, le dispositif de concentration comporte une découpe dans deux panneaux opposés, lesdites découpes étant formées au niveau du foyer du paraboloïde de part et d'autre du foyer, lesdits moyens de montage comportant un cadre de réception dudit récipient solidaire de deux tiges de support aptes à traverser lesdites découpes, lesdits moyens d'orientation comprenant des pieds susceptibles de recevoir les extrémités des tiges de support, et des moyens de réglage en élévation du dispositif de concentration.

Du fait de ces découpes, le récipient disposé au foyer est à l'intérieur du paraboloïde, à proximité du fond de ce dernier. Les risques d'incendie et d'éblouissement sont ainsi éliminés.

L'orientation de l'appareil en azimut s'effectue simplement en disposant ses pieds convenablement sur le sol. Son orientation en élévation est réalisée à l'aide des moyens de réglage par pivotement du dispositif de concentration autour des tiges de support.

On observera que l'on peut programmer le démarrage de la cuisson en anticipant la position du soleil au moment de l'installation de l'appareil. La cuisson a lieu même si le dispositif de concentration est mal orienté.

Plus particulièrement, lesdits moyens de réglage en élévation peuvent comprendre un bras de réglage muni à une de ses extrémités d'un aimant articulé apte à coopérer avec une lame d'acier fixée le long d'une génératrice du dispositif de concentration intermédiaire entre les deux découpes, l'autre extrémité du bras de réglage étant agencée pour être fixé de façon solidaire desdits pieds. En particulier, cette extrémité du bras de réglage peut être solidaire d'un socle sur lequel sont montés les pieds de l'appareil.

Le réglage du dispositif de concentration en élévation est donc particulièrement aisé. Il suffit de faire glisser l'aimant le long de la lame d'acier et de faire pivoter le dispositif de concentration jusqu'à l'inclinaison voulue. Cette opération s'effectue derrière l'appareil par rapport au soleil et donc sans danger.

Pour intervenir sur le récipient et les aliments qu'il contient, il suffit de décoller l'aimant et de retourner le dispositif de concentration, les opérations se déroulant alors à l'ombre. Cet agencement à aimant présente également l'avantage qu'en cas de fortes rafales de vent, l'aimant se décolle et libère le dispositif de concentration sans renverser le récipient.

Lesdits moyens de montage peuvent comprendre deux demi cadres de réception prolongés chacun par deux extensions opposées, des moyens d'assemblage étant prévus pour assembler chacune des extensions d'un des demi cadres avec une des extensions de l'autre demi cadre de manière à former les deux tiges de support.

Les moyens d'assemblage, par exemple deux bagues, peuvent être prévus à demeure, ou être constitués par les pieds de l'appareil.
Deux pieds situés du même côté d'une des découpes peuvent être réalisés d'une seule pièce et former à leur jonction une boucle de section trapézoïdale apte à recevoir la tige de support respective, la largeur de ladite boucle étant supérieure à l'épaisseur de la tige à son extrémité et inférieure à ladite épaisseur dans sa partie adjacente à l'extrémité libre des pieds, ladite boucle étant fermée par une bague coulissante de blocage de la tige.

La forme trapézoïdale de la boucle permet une introduction facile de la tige de support dans la partie de plus grande largeur, puis son coulissement et son coincement par rapport au pied dans la partie rétrécissante. La bague assure un blocage de la tige et empêche ainsi qu'un effort de coulissement trop important ne provoque un écartement trop grand de la boucle et une sortie de la tige de cette dernière.

L'invention a également pour objet un emballage de transport d'un appareil tel que décrit ci-dessus, avec le dispositif de concentration en position fermée, cet emballage comportant des moyens de réception en position d'utilisation pour les extrémités libres desdits pieds et pour lesdits moyens de réglage en élévation.

Cet emballage de transport, par exemple une boîte métallique, en bois ou en matière plastique, sert donc de socle à l'appareil monté. Ce dernier est donc stable, en particulier vis-à-vis du vent, d'autant que le socle peut être lesté.

Dans un mode de réalisation particulier, les moyens de réception pour les extrémités libres desdits pieds comprennent des rails de guidage et des fentes de réception.

Ces rails assurent une bonne solidarité entre les pieds et le socle constitué par l'emballage, et donc une meilleure résistance au vent.

On décrira maintenant, à titre d'exemple non limitatif, un mode de réalisation de l'invention en référence aux dessins schématiques annexés dans lesquels :
- la figure 1 est une vue en coupe transversale d'un dispositif de concentration selon l'invention, en position fermée, ou repliée ;
- la figure 1a est une vue schématique à plus grande échelle du détail A de la figure 1 ;
- la figure 2 est une vue en perspective de ce dispositif de concentration en cours de déploiement ;
- la figure 3 est une vue en perspective de l'avant de l'appareil de cuisson selon l'invention ;
- la figure 4 en est une vue en perspective de trois quarts arrière ;
- la figure 5 est une vue en perspective d'un coin de l'emballage de transport de l'appareil montrant les moyens de réception d'un de ses pieds ;

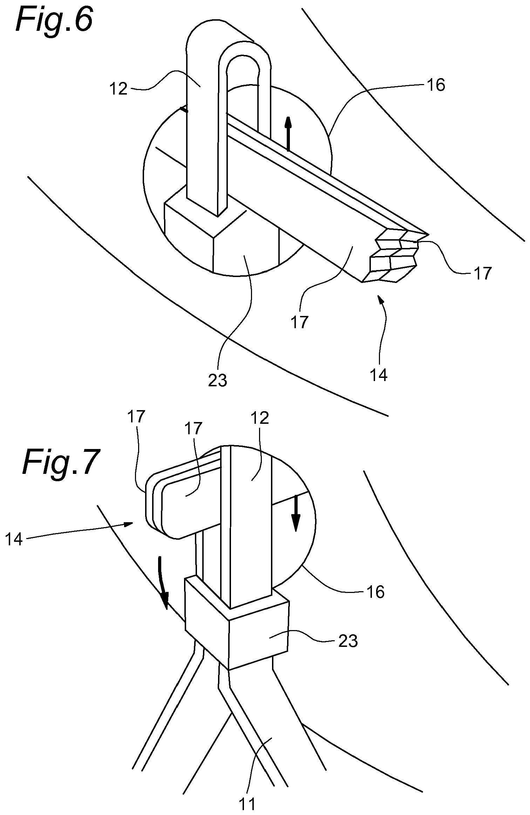

- la figure 6 est une vue en perspective depuis l'intérieur du dispositif de concentration, des organes de montage de l'appareil de cuisson en position montée ; et
- la figure 7 est une vue en perspective depuis l'extérieur du dispositif de concentration, de ces organes de montage en cours de montage.

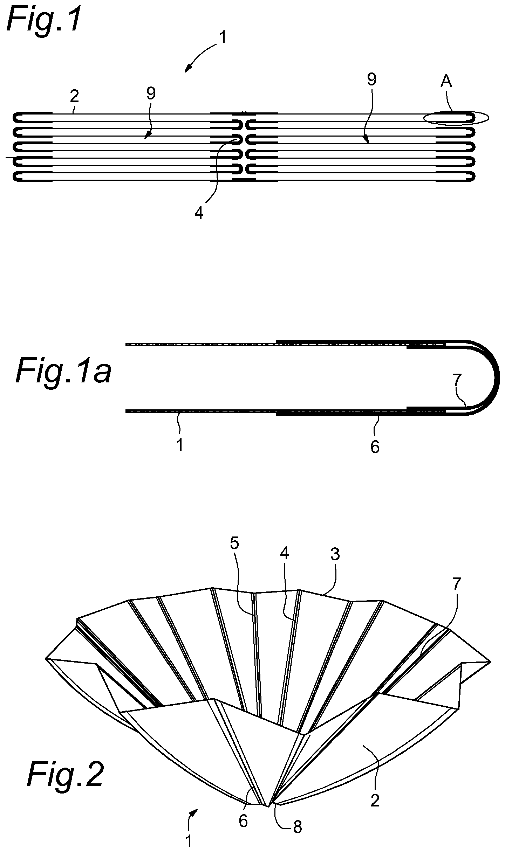

Le dispositif de concentration 1 selon l'invention est montré aux figures 1, 1a et 2 respectivement plié et en cours de dépliage.

Ce dispositif est formé de vingt panneaux en forme de fuseaux constitués de plaques réfléchissantes 2 flexibles formant miroir, par exemple en tôle d'aluminium de l'ordre de 0,5 mm d'épaisseur, de manière à pouvoir être incurvés sans dépasser leur limite d'élasticité, et à pouvoir supporter sans flambage la compression dans leur plan nécessaire à leur arc-boutement lors du dépliage du dispositif. Ces plaques sont découpées en forme de "triangles" rectangles, dont les deux bords 3 et 4 formant les deux côtés de l'angle droit sont rectilignes et le bord 5 formant "l'hypoténuse" est convexe, par exemple sensiblement parabolique.

Les bords 3 formant les petits côtés des angles droits des différents panneaux forment ensemble le bord libre du paraboloïde un fois déplié.

Les bords 4 formant les grands côtés des angles droits des différents panneaux sont articulés deux à deux, de même que leurs bords 5 formant l'hypoténuse. Chaque articulation (figure 1a) est réalisée au moyen de deux bandes adhésives. Une bande adhésive extérieure 6 assure la liaison mécanique et est formée à cet effet d'un composite renforcé en fibres de verre. Une bande adhésive intérieure 7 réfléchissante assure la continuité optique du miroir constitué par les panneaux 2 et protège la bande adhésive extérieure de la poussière, du sable ou de la vapeur.

En pratique, dans la configuration de la figure 1a, et dans le but d'optimiser l'arc-boutement, la bande adhésive intérieure 7 est pliée à plat tandis que la bande adhésive extérieure 6 est fortement tendue, épousant le bord des tôles.

On observera que, lorsque le dispositif est déplié, les bords 4, et 5 respectivement, des panneaux sont jointifs de manière à assurer l'arc-boutement de ces derniers.

Afin de faciliter le pliage du dispositif, les angles entre les bords 4 et les bords 5 des panneaux 2 sont découpés et forment ainsi un trou 8 généralement circulaire au sommet du paraboloïde.

En position pliée (figure 1), les panneaux 2 sont repliés en deux empilements 9 en accordéon juxtaposés. Dans cette position, les bords 4 des panneaux sont côte à côte deux à deux entre les deux empilements, et les bords 5 forment les bords des empilements. Les panneaux 2 situés en surface de chaque empilement sont reliés deux à deux par leurs bords 4, rendant ainsi solidaires les deux empilements.

La liaison de ces panneaux de surface peut être articulée comme montrée aux dessins, ou rigide, par exemple par soudage de leurs bords 4.

Le dépliage du dispositif s'effectue manuellement en ouvrant les panneaux comme montré à la figure 2, de sorte que chacune de ses sections forme une étoile à 10 branches, dont les bords 4 forment les arêtes intérieures et les bords 5 forment les arêtes extérieures.

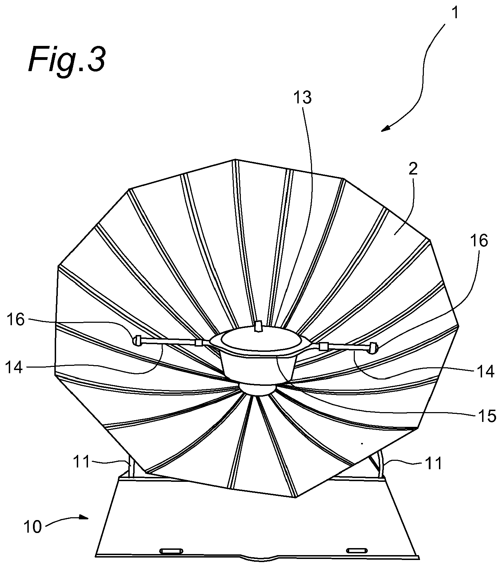

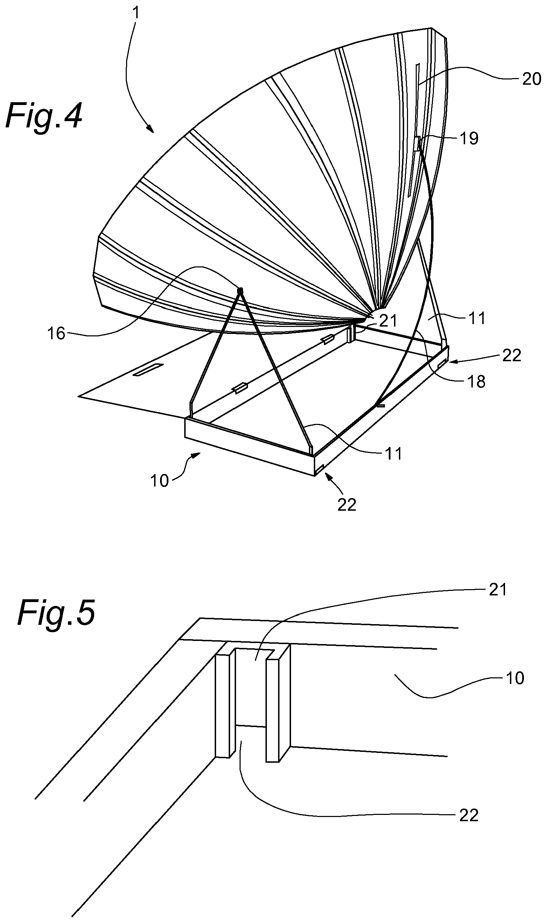

Au cours du déploiement, ces sections se rapprochent de plus en plus de la forme d'un décagone régulier, tandis que les panneaux 2 subissent des contraintes mécaniques qui les font s'incurver. Lorsque cette forme de décagone régulier est atteinte (visible sur les figures 3 et 4), il se produit une inversion des contraintes qui provoque un arc-boutement des panneaux les uns sur les autres et rend la structure du dispositif autoporteuse.

On se référera maintenant aux figures suivantes montrant l'ensemble de l'appareil de cuisson monté avec son dispositif 1 de concentration déployé, ainsi que sa boîte d'emballage 10.

Les deux pieds 11 de l'appareil, formés d'un méplat métallique élastique, par exemple en acier doux, sont en forme générale de V inversé, dont les extrémités libres des branches sont fixées comme décrit ci-après sur la boîte 10. Au sommet du V, ses branches forment une boucle 12 de section généralement trapézoïdale, plus large à son extrémité que vers l'extrémité libre du pied.

Un récipient de cuisson 13 est monté au foyer du dispositif 1. A cet effet, deux tiges de support 14 sont solidaires d'un cadre de réception 15 pour le récipient 13. Les tiges de support 14 traversent deux découpes 16 formées dans le dispositif 1 au niveau de son foyer par rapport à son axe, et les extrémités libres de ces tiges s'engagent dans les boucles 12. Les tiges 14 ont une largeur intermédiaire entre la plus grande et la plus petite largeur des boucles 12.

L'ensemble formé par les deux tiges de support 14 et le cadre de réception 15 est réalisé à partir de deux méplats métalliques formant chacun un demi cadre et deux extensions 17. Une extension 17 d'un des deux méplats métalliques forme, de façon solidaire ou non, avec une extension 17 de l'autre méplat métallique, une des tiges de support 14.

Un bras de réglage en élévation 18, également réalisé à l'aide d'un méplat métallique, a une extrémité fixée à la boîte 10 et son autre extrémité supporte de façon articulée un aimant 19. Cet aimant 19 coopère avec une bande d'acier souple 20 collée sur un des panneaux 1, le long d'une génératrice du paraboloïde entre les panneaux des découpes 16. Le point de contact de l'aimant 19 et de la bande 20 détermine donc l'angle de rotation du dispositif de concentration 1 autour de l'axe constitué par les tiges de support 14.

Si l'on se réfère à la figure 4, on voit enfin que dans chaque angle de la boîte 10, un profilé en U 21 est fixé au rebord de manière à former un rail, et qu'une fente 22 est découpée dans ce rebord sous le rail.

Le montage de l'appareil de cuisson s'effectue de la manière suivante après déploiement du dispositif de concentration 1.

En premier lieu, les pieds 11 sont mis en place sur la boîte 10. A cet effet, ils comportent à leur extrémité libre une partie inférieure sensiblement verticale, puis recourbée horizontalement en forme de languette. L'écartement de leurs extrémités est légèrement supérieur à celui des rails 21 situés sur un même rebord de la boîte 10. Les pieds sont donc disposés dans les rails 21 en contraignant légèrement les bandes métalliques, et leurs extrémités recourbées sont engagées dans les fentes 22.

Les extrémités des tiges de support 14 sont engagées dans les découpes 16, puis dans la partie haute des boucles 12 des pieds 11. Les tiges sont ensuite poussées vers le bas écartant légèrement les branches des boucles 12 par effet de coincement, jusqu'à venir en butée sur des bagues 23 engagées sur ces boucles. La section généralement trapézoïdale des boucles 12 empêche les bagues 23 de s'échapper en l'absence des tiges 14.

Lorsque les tiges de support 14 sont montées sur les pieds 11, les découpes 16 entourent à la fois les boucles 12 et les extrémités des tiges, ce qui a pour effet de maintenir le dispositif de concentration centré et bien ouvert.

L'extrémité libre recourbée du bras de réglage 18 est ensuite engagée dans une fente de réception formée dans le rebord de la boîte 10 et l'aimant 19 est plaqué sur la bande métallique 20.

## Revendications

1. Dispositif de concentration d'un faisceau de rayonnement électromagnétique, possédant une position ouverte et une position fermée, et comprenant une pluralité de panneaux en matériau flexible en forme de fuseaux (2) sensiblement plans en l'absence de contrainte mécanique, chaque panneau ayant deux bords de liaison (4, 5) et un bord libre (3) et chaque panneau courant étant articulé à deux panneaux adjacents le long de ses dits bords de liaison, les panneaux étant assemblés pour former, dans la position ouverte, une surface en forme générale de paraboloïde, le dispositif étant composé d'un nombre 2n, n étant un nombre entier, de panneaux, lesdits panneaux, dans la position ouverte, étant arc-boutés les uns à côté des autres et adoptant une forme incurvée pour former ensemble un paraboloïde, ***caractérisé par le fait que*** dans la position fermée, les panneaux sont repliés en deux empilements (9) en accordéon juxtaposés, chaque panneau extérieur de chaque empilement étant relié par un de ses bords de liaison à un bord de liaison du panneau adjacent de l'autre empilement, et **par le fait que** chaque panneau possède, en l'absence de contrainte mécanique, un bord de liaison (4) sensiblement rectiligne et un bord de liaison (5) convexe, chaque bord de liaison rectiligne d'un panneau étant relié à un bord de liaison rectiligne d'un panneau adjacent et chaque bord de liaison convexe d'un panneau étant relié à un bord de liaison convexe d'un panneau adjacent, de manière que, dans la position fermée du dispositif, les deux empilements juxtaposés ont leurs bords rectilignes côte à côte et leurs bords convexes à l'extérieur des deux empilements juxtaposés, et que dans la position ouverte, ledit ensemble forme un paraboloïde autoporteur.

2. Dispositif selon la revendication 1, dans lequel chaque panneau extérieur de chaque empilement est relié rigidement par un de ses bords de liaison à un bord de liaison du panneau adjacent de l'autre empilement.

3. Dispositif selon la revendication 1, dans lequel chaque panneau extérieur de chaque empilement est relié de façon articulée par un de ses bords de liaison à un bord de liaison du panneau adjacent de l'autre empilement.

4. Dispositif selon l'une des revendications précédentes, dans lequel les bords de liaison convexes (5) ont une forme générale de parabole.

5. Dispositif selon l'une des revendications précédentes, dans lequel l'angle de chaque panneau compris entre les deux bords de liaison est découpé de manière à former un trou au sommet du paraboloïde dans la position ouverte du dispositif.

6. Dispositif selon l'une des revendications précédentes, dans lequel lesdits panneaux sont réalisés en tôle formant miroir.

7. Dispositif selon l'une des revendications précédentes, dans lequel lesdits panneaux sont reliés, du côté intérieur au paraboloïde, par un matériau (7) souple adhésif formant miroir.

8. Dispositif selon l'une des revendications précédentes, dans lequel lesdits panneaux sont reliés, du côté extérieur au paraboloïde, par un matériau (6) souple adhésif renforcé en fibres de verre.

9. Appareil de cuisson solaire, ***caractérisé par le fait qu'***il comprend un dispositif de concentration (1) selon l'une des revendications précédentes pour concentrer le rayonnement solaire au foyer dudit paraboloïde, des moyens d'orientation pour ledit dispositif et des moyens de montage (14) d'un récipient (13) de cuisson audit foyer.

10. Appareil selon la revendication précédente, dans lequel le dispositif de concentration comporte une découpe (16) dans deux panneaux opposés, lesdites découpes étant formées au niveau du foyer du paraboloïde de part et d'autre du foyer, lesdits moyens de montage comportant un cadre de réception (15) dudit récipient solidaire de deux tiges de support (14) aptes à traverser lesdites découpes, lesdits moyens d'orientation comprenant des pieds (11) susceptibles de recevoir les extrémités des tiges de support, et des moyens de réglage (18-20) en élévation du dispositif de concentration.

11. Appareil selon la revendication précédente, dans lequel lesdits moyens de réglage en élévation comprennent un bras de réglage (18) muni à une de ses extrémités d'un aimant (19) articulé apte à coopérer avec une lame d'acier (20) fixée le long d'une génératrice du dispositif de concentration intermédiaire entre les deux découpes, l'autre extrémité du bras de réglage étant agencée pour être fixé de façon solidaire desdits pieds.

12. Appareil selon l'une des revendications 10 et 11, dans lequel lesdits moyens de montage comprennent deux demi cadres de réception prolongés chacun par deux extensions (17) opposées, des moyens d'assemblage étant prévus pour assembler chacune des extensions d'un des demi cadres avec une des extensions de l'autre demi cadre de manière à former les deux tiges de support.

13. Appareil selon l'une des revendications 10 à 12, dans lequel deux pieds situés du même côté d'une des découpes sont réalisés d'une seule pièce et forment à leur jonction une boucle (12) de section trapézoïdale apte à recevoir la tige de support respective, la largeur de ladite boucle étant supérieure à l'épaisseur de la tige à son extrémité et inférieure à ladite épaisseur dans sa partie adjacente à l'extrémité libre des pieds, ladite boucle étant fermée par une bague (23) coulissante de blocage de la tige.

14. Emballage de transport de l'appareil selon l'une des revendications 10 à 13, avec le dispositif de concentration en position fermée, ***caractérisé par le fait qu'***il comporte des moyens de réception (21, 22) en position d'utilisation pour les extrémités libres desdits pieds et pour lesdits moyens de réglage en élévation.

15. Emballage de transport selon la revendication précédente, dans lequel les moyens de réception pour les extrémités libres desdits pieds comprennent des rails de guidage (21) et des fentes de réception (22).

## Patentansprüche

1. Vorrichtung zur Konzentration eines elektromagnetischen Strahles, welche eine offene Position und eine geschlossene Position hat und aufweisen eine Vielzahl von Paneelen aus flexiblem Material in Form von Zonen, im Wesentlichen eben in Abwesenheit mechanischer Beanspruchung, wobei jedes Paneel zwei Verbindungskanten (4, 5) und einen freien Rand (3) hat, und jedes Paneel an zwei benachbarte Paneele entlang der Verbindungskanten beweglich angelenkt ist, wobei die Paneele verbunden sind, um in der offenen Position im Wesentlichen eine Oberfläche eines Paraboliden auszuformen, wobei die Vorrichtung aus 2n, wobei n eine ganze Zahl ist, Paneelen zusammengesetzt ist, wobei die Paneele in der offenen Position miteinander verspannt sind und eine gebogene Form adaptieren um zusammen einen Paraboloid auszubilden,
**dadurch gekennzeichnet,**
**dass** in der geschlossenen Position die Paneele auf zwei Stapeln (9) nebeneinanderliegend zusammengefaltet sind, wobei jedes äußere Paneel jedes Stapels durch eine seiner Verbindungskanten mit einer Verbindungskante eines benachbarten Paneels des anderen Stapels verbunden ist und dass jedes Paneel in Abwesenheit einer mechanischen Beanspruchung eine Verbindungskante (4) besitzt, die im Wesentlichen gradlinig ist, und eine Verbindungskante (5), die konvex ist, wobei jede gradlinige Verbindungskante eines Paneels mit einer gradlinigen Verbindungskante eines benachbarten Paneels verbunden ist, und jede konvexe Verbindungskante eines Paneels mit einer konvexen Verbindungskante des benachbarten Paneels verbunden ist, in Art und Weise, dass in der geschlossenen Position der Vorrichtung die zwei nebeneinanderliegenden Stapel ihre geradlinigen Katen Seite an Seite und ihre konvexen Kanten an der Außenseite der zwei nebeneinanderliegenden Stapel haben und dass in der offenen Position der Verband einen freitragenden Paraboloid ausbildet.

2. Vorrichtung nach Anspruch 1, wobei jedes äußere Paneel jedes Stapels starr durch eine seiner Verbindungskanten mit einer Verbindungskante eines benachbarten Paneels des anderen Stapels verbunden ist.

3. Vorrichtung nach Anspruch 1, wobei jedes äußere Paneel jedes Stapels über eine seiner Verbindungskanten mit einer Verbindungskante eines benachbarten Paneels des anderen Stapels schwenkbar verbunden ist.

4. Vorrichtung nach einem der vorangehenden Ansprüche, wobei die konvexen Verbindungskanten (5) im Wesentlichen die Form einer Parabel haben.

5. Vorrichtung nach einem der vorangehenden Ansprüche, wobei die Ecke jedes Paneels zwischen den beiden Verbindungskanten geschnitten ist in der Art und Weise, um eine Öffnung an der Spitze des Paranoides in der geöffneten Position der Vorrichtung auszubilden.

6. Vorrichtung nach einem der vorangehenden Ansprüche, wobei die Paneele aus einem spiegelnden Blech realisiert sind.

7. Vorrichtung nach einem der vorangehenden Ansprüche, wobei die Paneele auf der Innenseite des Paraboloids aus einem flexiblen spiegelnden Material (7) gemacht sind.

8. Vorrichtung nach einem der vorangehenden Ansprüche, wobei die Paneele an der Außenseite des Paraboloids durch einen Kunststoffmaterial (6) verstärkt durch Glasfasern sind.

9. Apparat zum Solarkochen,
**dadurch gekennzeichnet,**
**dass** es eine Vorrichtung zur Konzentration (1) nach einem der vorhergehenden Ansprüche zum Konzentrieren der Sonnenstrahlen im Zentrum des Paraboloids, Mittel zum Ausrichten (14) für die Vorrichtung und Befestigungsmittel für ein Kochbehältnis (13) im Zentrum aufweist.

10. Apparat nach dem vorangehenden Anspruch, wobei die Vorrichtung zur Konzentration eine Aussparung (16) auf zwei gegenüberliegenden Paneelen aufweist, die Aussparungen beidseitig auf Höhe des Fokus des Paraboloids ausgebildet sind, wobei die Befestigungsmittel einen Aufnahmerahmen (15) für das Behältnis aus zwei Haltestangen (14) aufweisen, um die Aussparungen zu durchqueren, wobei die Mittel zum Ausrichten Füße (11), die in der Lage die Enden der Haltestangen aufzunehmen und Mittel zum Einstellen (18-20) der Elevation der Vorrichtung zur Konzentration aufweisen.

11. Apparat nach dem vorangehenden Anspruch, wobei die Mittel zum Einstellen der Elevation einen Stellarm (18), welcher an einem seiner Enden mit einem Magneten (19) versehen ist, der ausgebildet ist, um mit einem Stahlblatt (20), welches entlang eines Generators der Vorrichtung zur Konzentration in der Mitte zwischen den beiden Öffnungen angeordnet ist, zu kooperieren, wobei das andere Ende des Stellarms angeordnet ist, um in fester Art und Weise mit den Füßen verbunden zu sein.

12. Apparat nach einem der Ansprüche 10 oder 11, wobei die Befestigungsmittel zwei halbe Aufnahmearme aufweisen, wobei jeder durch zwei gegenüberliegende Verlängerung (17) verlängert ist, wobei Mittel zum Zusammenbauen vorgesehen sind, um je eine Verlängerung eines Halbarmes mit einer der Verlängerungen des anderen Halbarmes in einer Art und Weise zusammenzufügen, um durch die zwei Haltestangen zu bilden.

13. Apparat nach einem der Ansprüche 10 bis 12, wobei die zwei Füße, welche auf derselben Seite von einem der Aussparungen situiert sind, einstückig ausgeführt sind und an ihrer Verbindung eine Lasche (12) mit trapezförmigem Querschnitt ausbilden, ausgestaltet um die Haltestangen entsprechend aufzunehmen, wobei die Breite der Lasche größer ist als die Dicke der Stange an seinem Ende und geringer als die Dicke an seinem Bereich benachbart zum freien Ende des Fußes, wobei die Lasche durch eine Muffe (23) zum Blockieren des Schaftes abgeschlossen ist.

14. Transportverpackung eines Apparats nach einem der Ansprüche 10 bis 13, mit einer Vorrichtung zur Konzentration in geschlossenen Position,
**dadurch gekennzeichnet,**
**dass** es Aufnahmemittel (21, 22) für die freien Enden der Beine und für die Einstellmittel der Evaluation bei der Verwendung aufweist.

15. Transportverpackung nach dem vorangegangenen Anspruch, wobei die Aufnahmemittel der freien Enden der Füße Führungsnuten (21) und Aufnahmeschienen (22) aufweisen.

## Claims

1. A device for concentrating a beam of electromagnetic radiation, having an open position and a closed position, and comprising a plurality of spindle-shaped panels made of a flexible material (2), and substantially flat in the absence of mechanical strain, each panel having two connecting edges (4, 5) and one free edge (3) and each current panel being hinged with two adjacent panels along said connecting edges, the panels being assembled to form, in the open position, a surface with a general shape of a paraboloid, the device consisting in a number 2n, n being an integer, of panels, said panels, in the open position, being braced next to each other and adopting an curved shape as a set forming a paraboloid, **characterized in that** in the closed position, the panels are folded into two juxtaposed stacks (9) in accordion style, each outer panel of each stack being connected by one of its connecting edges to a connecting edge of the adjacent panel of the other stack, and **in that** each panel has, in the absence of mechanical strain, one substantially rectilinear connecting edge (4) and one convex connecting edge (5), each rectilinear connecting edge of the panel being connected to a rectilinear connecting edge of an adjacent panel and each convex connecting edge of the panel being connected to a convex connecting edge of an adjacent panel, such that, in the closed position of the device, the two juxtaposed stacks have their rectilinear edges side-by-side and their convex edges on the outside of the two juxtaposed stacks, and **in that** in the open position, said set forms a self-supporting paraboloid.

2. The device according to Claim 1, wherein each outer panel of each stack is rigidly connected by one of its connecting edges to a connecting edge of the adjacent panel of the other stack.

3. The device according to Claim 1, wherein each outer panel of each stack is hingedly connected by one of its connecting edges to a connecting edge of the adjacent panel of the other stack.

4. The device according to any of the previous claims, wherein the convex connecting edges (5) have a generally parabolic shape.

5. The device according to any of the previous claims, wherein the corner of each panel comprised between the two connecting edges is cut so as to form a hole at the vertex of the paraboloid in the open position of the device.

6. The device according to any of the previous claims, wherein said panels are made of a sheet forming a mirror.

7. The device according to any of the previous claims, wherein said panels are connected, on the inside of the paraboloid, by an adhesive supple material (7) forming a mirror.

8. The device according to any of the previous claims, wherein said panels are connected, on the outside of the paraboloid, by a fiberglass-reinforced adhesive supple material (6).

9. A solar cooker, **characterized in that** it comprises a concentrating device (1) according to one of the previous claims for concentrating solar radiation at the focus of said paraboloid, orientating means for said device and mounting means (14) for a container (13) for cooking at said focus.

10. The cooker according to the previous claim, wherein the concentrating device includes a cut (16) in two opposite panels, said cuts being formed at the focus of the paraboloid on either side of the focus, said mounting means including a receiving frame (15) for said container secured by two support rods (14) able to pass through said cuts, said orientating means comprising legs (11) which are likely to receive the ends of the support rods, and means (18-20) for adjusting in elevation the concentrating device.

11. The cooker according to the previous claim, wherein said means for adjusting in elevation comprise an adjusting arm (18) provided at one of its ends with a hinged magnet (19) able to cooperate with a steel blade (20) attached along a generatrix of the concentrating device between the two cuts, the other end of the adjusting arm being arranged to be securely attached to said legs.

12. The cooker according to one of Claims 10 and 11, wherein said mounting means comprise two receiving half frames each extended by two opposite extensions (17), assembling means being provided to assemble each of the extensions of one of the half frames with an extension of the other half frame so as to form the two support rods.

13. The cooker according to one of Claims 10 to 12, wherein two legs located on a same side of one of the cuts are constructed in one piece and form, at their junction, a loop (12) with a trapezoidal section able to receive the respective support rod, the width of said loop being larger than the width of the rod at its end and smaller than said width in its portion which is adjacent to the free end of its legs, said loop being closed by a slide ring (23) for locking the rod.

14. A transport packaging for the cooker according to one of Claims 10 to 13, with the concentrating device being in the closed position, **characterized in that** it includes receiving means (21, 22) in position of use for the free ends of said legs and for said means for adjusting in elevation.

15. The transport packaging according to the previous claim, wherein the receiving means for the free ends of said legs comprise guide rails (21) and receiving slots (22).
